# EUROPEAN PATENT APPLICATION

(11) **EP 2 491 784 A1**
(43) Date of publication of application: **29.08.2012**
(21) Application number: 09850555.5
(22) Date of filing: 19.10.2009
(51) Int. Cl.: A01G 31/06, A01G 9/00

(54) **ENERGY-SAVING SYSTEM FOR VERTICALLY MOVING PLANT GROWING BOX, ENERGY-SAVING METHOD FOR VERTICALLY MOVING PLANT GROWING BOX, AND HOUSEHOLD ENERGY-SAVING DEVICE FOR GROWING PLANT**

(71) Applicant: Cube-Farm Co. Ltd., Hyogo 669-1346 (JP)
(72) Inventor: MARUMOTO, Seiichi, Sanda-shi Hyogo 669-1346 (JP)
(74) Representative: Reeve, Nicholas Edward
(86) International application number: PCT/JP2009/068029
(87) International publication number: WO 2011/048657

(57) **Abstract**

A plant-growing technique wherein growing boxes are provided in a vertically multistage manner attains reduction in power consumption and safely carries out implanting work, harvesting work, etc. of plants. This energy-saving system for vertically moving plant growing boxes is composed of the growing boxes (2) provided in the vertically multistage manner, a device (1) for vertically moving and connecting the growing boxes; and growing light source (20) wherein lighting can be controlled in a height direction corresponding to the vertical movement of the growing boxes. The intervals between upper and lower growing boxes can be increased and reduced by the device for vertically moving and connecting the growing boxes, and the growing box can be detached stage by stage.

## Description

### TECHNICAL FIELD

The present invention relates to an energy-saving system for vertically moving plant growing box, an energy-saving method for vertically moving plant growing box and a household energy-saving device for growing plant, wherein they are achieved to restrain their power consumption and power rates by connecting multiple plant growing boxes vertically, moving their boxes vertically using a hoisting device, controlling spaces between boxes vertically, and reducing necessary artificial light sources for growing plants, also wherein they are achieved to become easy for us to plant or harvest to their boxes by moving their boxes vertically.

### BACKGROUND OF THE INVENTION

An efficiency for harvesting was too bad because people used one level horizontal plant panel or one level plant panel with an inclination of about 40 degrees for growing vegetables. As paying attention to this point, the inventor of this invention offered "ULTRA-HIGH-DENSITY PLANT VERTICAL MIST HYDROPONIC SYSTEM AND RAISING PANEL" (Japanese Patent Number: 3320707). This invention made it possible to use upper field of the ground for plant efficiently.

### Prior Art

### Patent Publication

Patent Publication 1: JP Pat. 3320707

### DISCLOSURE OF THE INVENTION

But there is a problem that the system needs much power consumption and power rates for efficient water culture. The prior art relates to an open-field culture and the vertical mist hydroponic system needs many artificial light sources corresponding to the plant plane. We must use an artificial light source for many hours in order to try to increase productivity. Therefore, there is a problem that we need much power consumption in order to make a large-scale water culture system.

This invention relates to these prior problems, and offers an energy-saving system for vertically moving plant growing box, an energy-saving method for vertically moving plant growing box and a household energy-saving device for growing plant, wherein they are achieved to restrain their power consumption and power rates by connecting multiple plant growing boxes vertically, moving their boxes vertically using a hoisting device, controlling spaces between boxes vertically, and reducing a necessary artificial light source for growing plants corresponding to the boxes height.

An energy-saving system for vertically moving plant growing box is mainly comprised of plant growing boxes that are installed as multistage style vertically, a hoisting device, artificial light sources that can be controlled to turn on or off corresponding to the movement of the plant growing boxes, and the plant growing boxes that the height between them can be widened or reduced by the hoisting device,

An energy-saving method for vertically moving plant growing box that is comprised of plant growing boxes that are installed as multistage style vertically, a hoisting device, artificial light sources that can be controlled to turn on or off corresponding to the moving of the plant growing boxes, mainly consists of below steps; a step to reduce the height between the lowermost box and the uppermost box due to lowered the uppermost box, a step to irradiate the artificial light to the all boxes corresponding to the said lowing movement, a step to increase the height between the lowermost box and the uppermost box due to lift up the uppermost box, a step to irradiate the artificial light to the all boxes corresponding to the said lifting movement.

An household energy-saving device for growing plant is mainly comprised of plant growing boxes that are installed as multistage style vertically, a hoisting device, artificial light sources that can be controlled to turn on or off corresponding to the movement of the plant growing boxes, a housing that includes the plant growing boxes, the hoisting device and the artificial light sources, and the plant growing boxes that the height between them can be widened pr reduced by the hoisting device.

### EFFECT OF INVENTION

This invention makes it possible to decrease power consumption and power rates because the multistage plant growing boxes can be moved vertically by using hoisting device, and controlled their height from lower boxes to upper boxes, and upper artificial light source can be turned off within the range for lowering the upper boxes.

This invention also makes it possible that one line of artificial light source can be lit both side plant growing boxes because the line of artificial light source is put between two lines of vertically moving plant growing boxes.

This invention also makes it possible for us to easily attach and remove the plant growing boxes to/ from the hoisting device on the ground because the plant growing boxes can be gone up or gone down by using the hoisting device. As the result of this invention, we can easily and safely plant farm products to the boxes, harvest them, and operate the hoisting device without a ladder etc.

This invention also makes it possible to plant farm products or vegetables in house, restaurants and so on easily by using a household energy-saving device for growing plant. This household energy-saving device can be decreased power consumption and power rates because the range from lower boxes to upper boxes can be controlled freely and decreased the range of artificial light sources by going down the boxes.

### BRIEF DESCRIPTION OF THE DRAWING

A preferred form of the present invention is illustrated in the accompanying drawing in which:
Fig. 1 is a front view of a hoisting device that carries plant growing boxes.
Fig. 2 is a diagonal view that shows hoisting situation of plant growing boxes.
Fig. 3 is an explanatory view about a hoisting device.
Fig. 4 is an explanatory view that shows the location of plant growing boxes and artificial light sources.
Fig. 5 is a side sectional view of a hoisting device which plant growing boxes are gone down.
Fig. 6 is a side sectional view of a hoisting device which plant growing boxes are gone up.
Fig. 7 is a diagonal view of plant growing boxes connected to a hoisting device.
Fig. 8 is a plan view of parallel-arranged plant growing boxes.

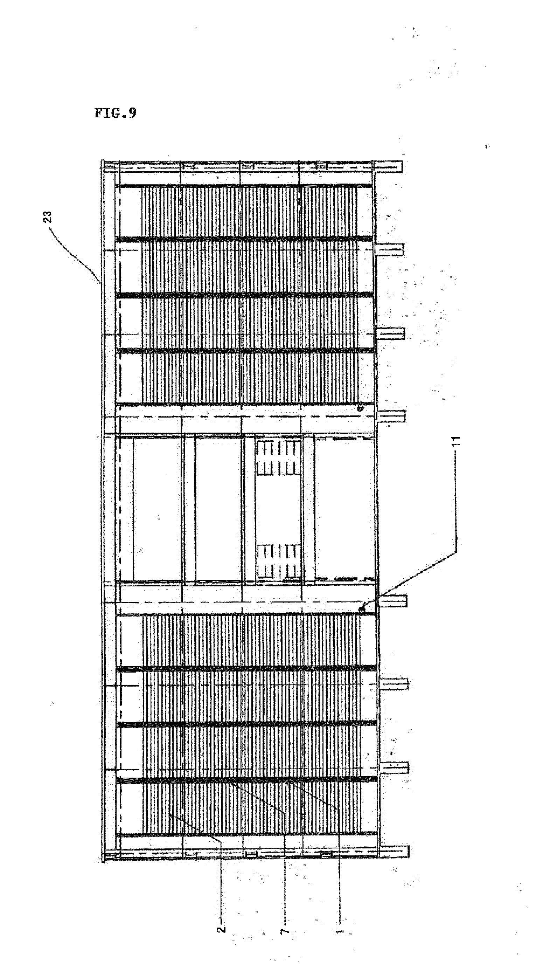

Fig. 9 is a front sectional view of parallel-arranged plant growing boxes.
Fig. 10 is a side sectional view of parallel-arranged plant growing boxes.
Fig. 11 is an explanatory front view of an artificial light source.
Fig. 12 is a front view of a plant growing box.
Fig. 13 is a front view of a household energy-saving device for growing plant.
Fig. 14 is a side sectional view of a household energy-saving device which plant growing boxes are gone down.
Fig. 15 is a side sectional view of a household energy-saving device which plant growing boxes are gone up.
Fig. 16 is a side sectional view of a household energy-saving device except for a hoisting device.
Fig. 17 is a diagonal view of another form's plant growing boxes connected to a hoisting device.

### DETAILED DESCRIPTION OF THE PREFERRED EMBODIMENT

An energy-saving system for vertically moving plant growing box of this invention is mainly composed of multistage plant growing boxes that are set up vertically on the ground, hoisting devices and artificial light sources.

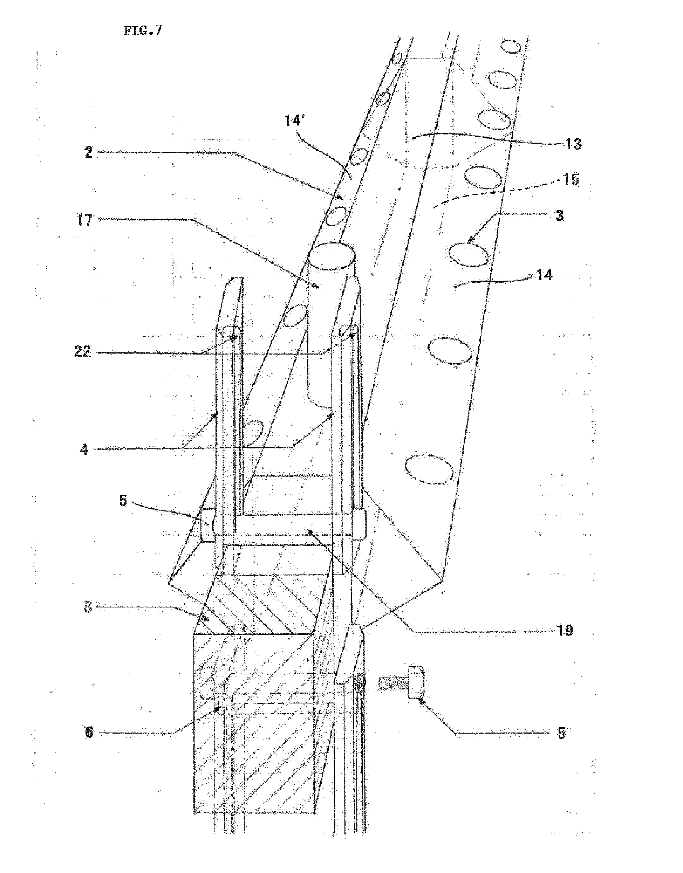

The materials of plant growing boxes are optional, but it is better to use light materials that withstand an impact when the boxes move, and use materials that do not permeate a liquid solution. FRP resin, urethane resin or styrene foam are preferably utilized. The plant growing boxes can be connected to a coupling device. The form of boxes is also optional, but the boxes form cubic body that farm products can be planted, for example, rectangular solid that has some holes for plants on top face, or overturned hexagonal solid (2) that has some holes for plants on top face or slant face like Fig. 7.

A hoisting device is also optional, but it can connect multistage plant growing boxes vertically, and it can move each plant growing box up and down. For example, multiple plant growing boxes are connected with wire rope or chain vertically and a winch rolls up or down the uppermost box. A hydraulic jack can also be used instead of a winch. It is desirable that the wire rope or chain connects both side of plant growing box because of giving stability to it. It is desirable that each boxes can easily attach to and remove from the coupling device.

An artificial light source is also optional, but all multistage plant growing boxes that are gone up to the highest position can be lit up with the artificial light source. And the artificial light source can be controlled the range of illumination height. For example, multiple spherical lamps are arranged vertically, or multiple stick lights are arranged vertically in order to shine all multistage boxes. These lamps or lights can shine only necessary vertical range. When we use lamps as artificial light sources, the less heat lamps are preferred in order to avoid spoiling plants.

The plant growing box has plant growing pots at regular intervals and farm products (especially vegetables) are planted to these pots. Generally speaking, vegetation becomes bigger as growing. Therefore, vegetation that does not grow needs not large space vertically, but vegetation that grows bigger needs large space vertically.

If small vegetation is planted to plant growing pots, each multistage plant growing boxes are gone down. An upper box stops on the lower box because of avoiding their collision. And small embryonic vegetation is planted to the pots of the boxes. In this situation, we do not turn on all artificial light sources that are arranged vertically because the height range from lowermost box to uppermost box becomes minimum.

At next stage, if big vegetation is planted to plant growing pots, or the planted vegetation has grown, each box is gone up and large space is kept between boxes corresponding to the vegetation's size. We turn on the artificial light source corresponding to the height range from lowermost box to uppermost box. We can turn on and off the light by hand as looking to the multistage boxes, and we can also control the light automatically corresponding to the vertical movement of multistage boxes.

According to this invention, power consumption and power rates can be reduced because height range from lowermost box to uppermost box can be decreased when the planted vegetation does not grow, and necessary artificial light source can also be decreased. And after the planted vegetation grows, necessary large space can be kept by moving each multistage box to topside, and necessary light sources are not running short by increasing their light sources.

### FIRST EMBODIMENT

First embodiment of this invention is explained in detail referring Figures. This embodiment relates to how to attach plant growing boxes to hoisting device and how to hoist their boxes vertically corresponding to growth of their plants.

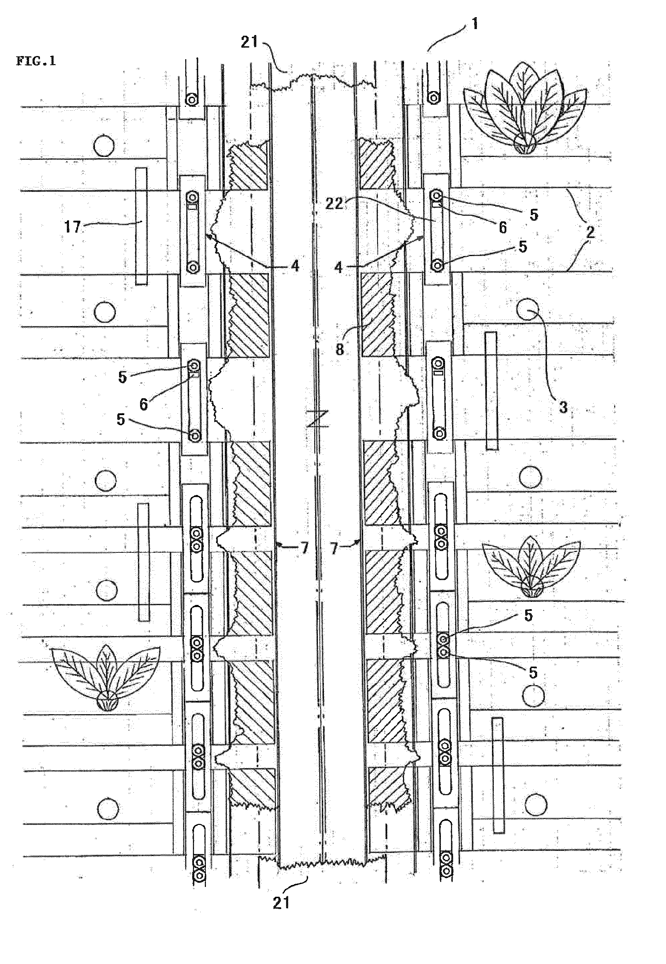

Referring to the Fig.1, Fig.2 and Fig 3, multistage plant growing boxes (2) are attached to a hoisting device (1) vertically, and each box can be hoisted. A hard steel pillar (21) is constituted in the center of the hoisting device, and the hoisting device is fixed on the ground or floor by this pillar. And the hoisting device (1) is mainly comprised of the steel pillar (21), plates (4) to connect boxes, bolts to fix the plates, a winch (11) to roll up or down the boxes, a wire (9) to connect the uppermost box with the winch (11), a chain sprocket wheel (10) to lead the wire, pulleys (12) (12') and guide-rails (7) to lead the boxes.

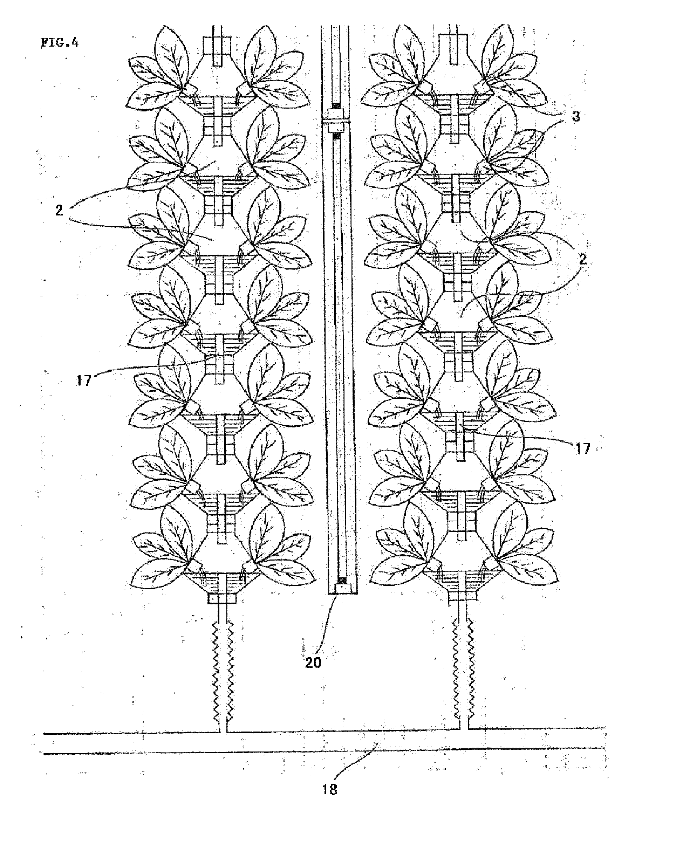

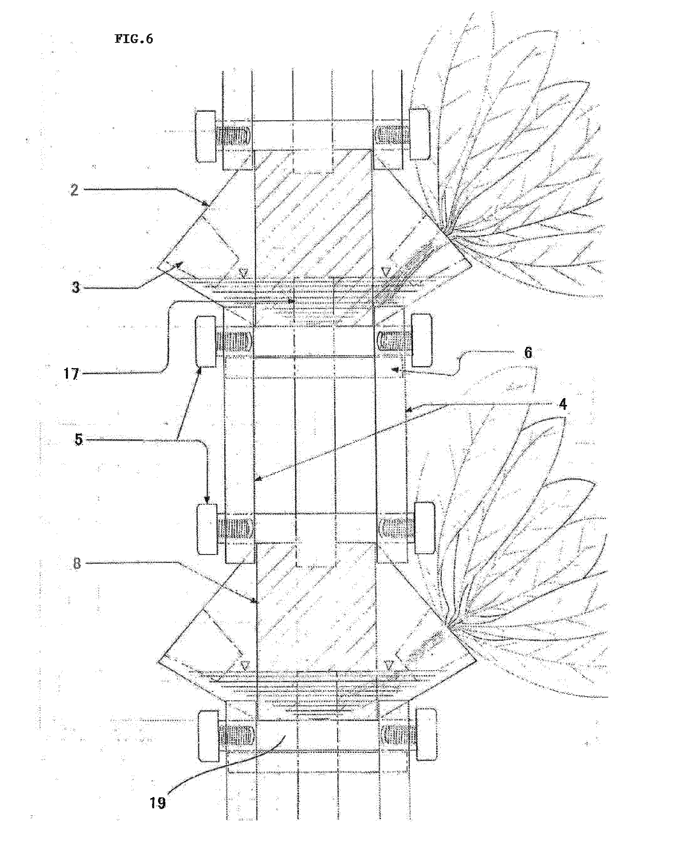

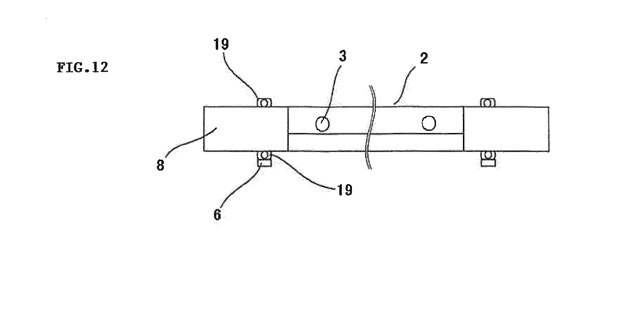

Referring to the Fig.7 and Fig.12, the form of the plant growing box (2) is like a hexagonal pole, and it forms one undersurface, one top surface and four slant faces. The height of one box is about 13cm and the width of it is about 2.8m.
The upper slant surfaces (14)(14') have plant growing pots (3) at regular intervals. Referring to the Fig 4-7, the box (2) is hollow inside, and nutritious solution is provided and excreted through a pipe (17) connected with a water pipe (16) and a drainage pipe (18). Roots of the vegetation in the pots are soaked in the nutritious solution of boxes and the solution is provided to the vegetation.
The both ends of plant growing box (2) forms into rectangular solid sliders (8) and these sliders fit into the guide-rails (7), and the boxes slide along the guide-rails (7) vertically.

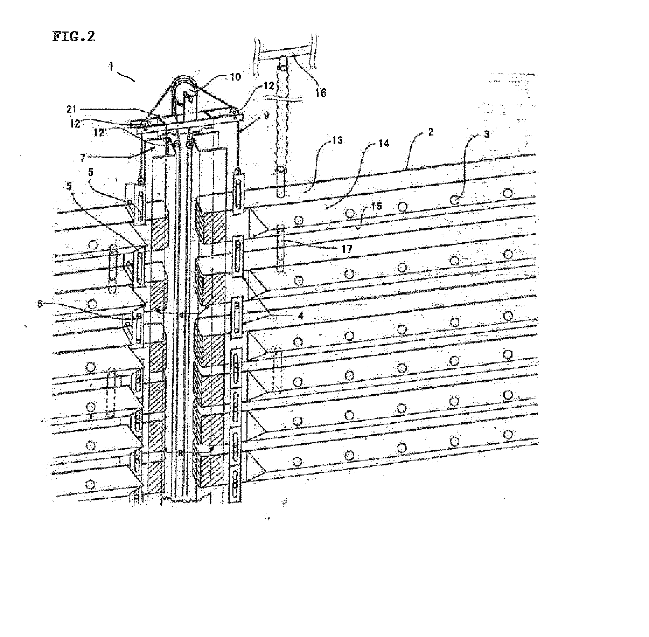

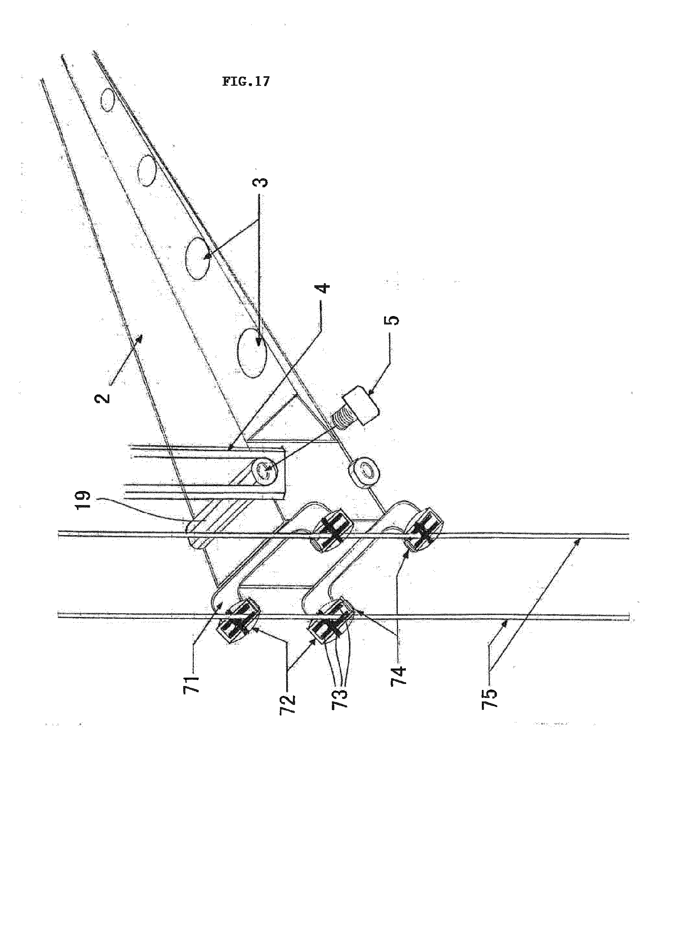

The Fig. 17 shows another example of both ends of plant growing boxes (2).
A couple of guide-ropes (75) that is put up vertically is used instead of guide-rails (7) of Fig. 2. We should use a guide-rope which withstand pulling power with 1.5ton-2.0ton, and the boxes can be supported with the rope.
Guide rollers (72) to stabilize the boxes through roller frames (71) are attached to the four corner of the end of the box. One side of the roller frames is attached to the boxes and the other side of the roller frames is attached to the guide rollers. The forms of the roller frames are optional.

Referring to Fig. 17, three cylindrical rollers (73) are set up in each guide roller (72), and one guide-rope is surrounded by the three cylindrical rollers. The plant growing boxes are fixed as the result that the guide rollers of both ends of boxes are connected to the guide ropes. The boxes smoothly glide vertically on the basis of their guide-ropes because the guide rollers of boxes rotate corresponding to the rising and falling movement of boxes. Snatch blocks (74) form one part of the guide roller. The cylindrical snatch blocks rotate like rollers and it can be opened and closed because a guide rope can be inserted to and extracted from the guide roller. This device makes it easy to connect plant growing boxes with guide-ropes.

As mentioned above, to using a pair of guide-ropes of the box ends as auxiliary parts for moving vertically leads to save production costs because steel guide-rail etc. is unnecessary.

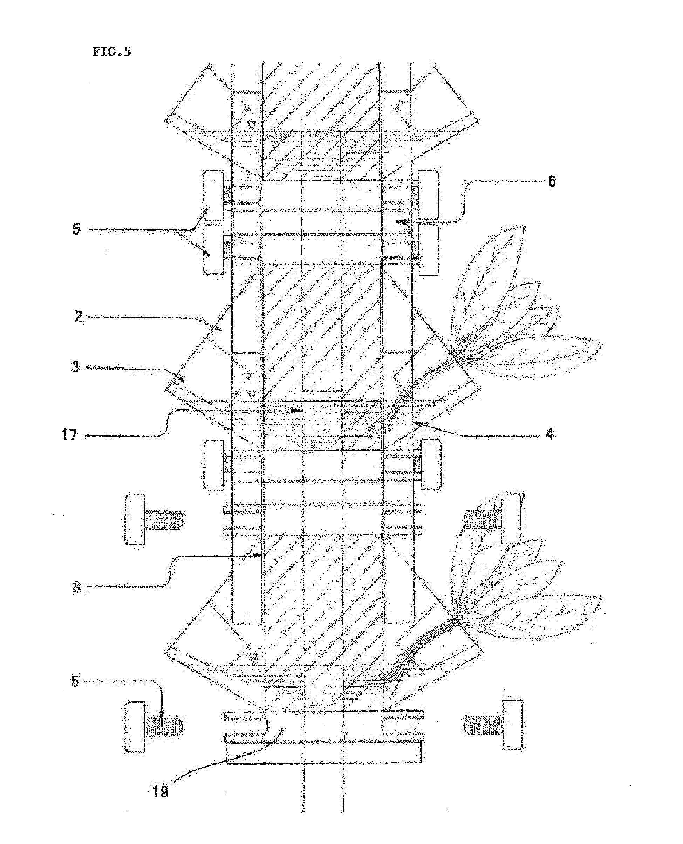

Referring to Fig. 5-7 and Fig.12, shafts (19) are attached to the top face (13) and under face (15) at nearly ends of the plant growing boxes. The box (2) is connected with plates (4) as the result of inserting the shafts (19) into the holes (22) of plates and fixing them by bolts (5). The forms of the shafts are optional, but better form is a cubic that has two planes in order to weld the shafts to both the box (2) and a shock absorber (6).
In this embodiment, the form of the shaft (19) is like cylinder that has two parallel planes, and both ends of the shaft has holes to insert bolts. The ends of the shafts penetrate the holes (22) of the plates and even if the shafts are fixed by bolts, the shaft (19) moves vertically because there are some spaces between the plates and the bolts.

The shock absorbers (6) prevent each vertical plant growing box (2) or each vertical bolt (5) from colliding each other when the boxes are gone down. The shock absorbers are attached to the shafts (19) of undersurface of the boxes. The form of the shock absorber is optional, but in this embodiment, the form of it is a rectangular parallelepiped as the same large as the shaft (19). The ends of the shock absorber (6) can be inserted to the holes (22) of plates (4), and it supports the vertical movement of the shafts.

We will explain how to connect vertical plant growing boxes (2) to plates (4) as below. Firstly, each end of shafts (19) and shock absorbers (6) attached to the undersurface of an upper box (2) is inserted to holes (22) of two plates (4), and the each end of shafts is fixed by bolts (5). Secondly, the other box is located under the upper box and each end of shafts attached to the top surface of the lower box is inserted to the holes (22) of two plates (4), and the each end of the shafts is also fixed by bolts (5). People can easily do this process at the both ends of the box simultaneously. On the other hand, the lower box can easily be removed as the result that bolts (5) of both ends of the lower box are took off and the both ends of shafts (19) are pulled out from the holes (22). Namely, the boxes can easily be attached or removed by bolting or unbolting four parts of the ends of the upper box and / or lower box.

The upper box and lower box can be opened at the width of length of plate's hole (22). When the upper box is gone up, the movement can be conveyed to the lower box through plates connected their boxes and the lower box also gone up. All multistage plant growing boxes are connected each other, and lower boxes are gone up corresponding to the movement that the upper box is gone up. The width between vertical boxes is equal because the length of the plates is also equal. On the other hand, when the upper box is gone down, the lower box is also gone down. The shock absorbers (6) of box are attached to the shafts (19) of the lower box, and the movement of box stops.

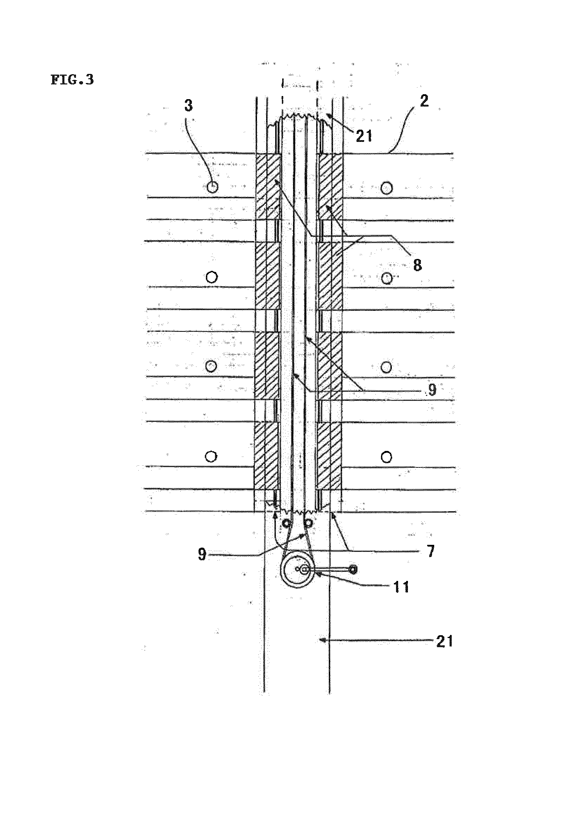

The plates (4) of the uppermost plant growing box is connected to wires (9). These wires are extended to the lowest part of the hoisting device through a chain sprocket wheel (10) and pulleys (12, 12') at the top of the hoisting device (1). As Fig.3 shows, the wires are connected to a winch on the ground, and the uppermost box (2) can be moved vertically through the wires by controlling the winch. The hoisting device (1) are installed on both sides of multistage boxes, and the boxes are moved in equilibrium.

A physical relationship between plant growing boxes (2) and artificial light sources (20) are described referring to Fig.4, Fig.8, Fig.10 and Fig.11.
In this embodiment, multistage plant growing boxes that are connected vertically by hoisting devices are located in rows. And a row of an artificial light source is located between two rows of the boxes. Fig.4 shows cross section of side view about them, however, hoisting devices or plates etc. are not illustrated in order to make their location clear.

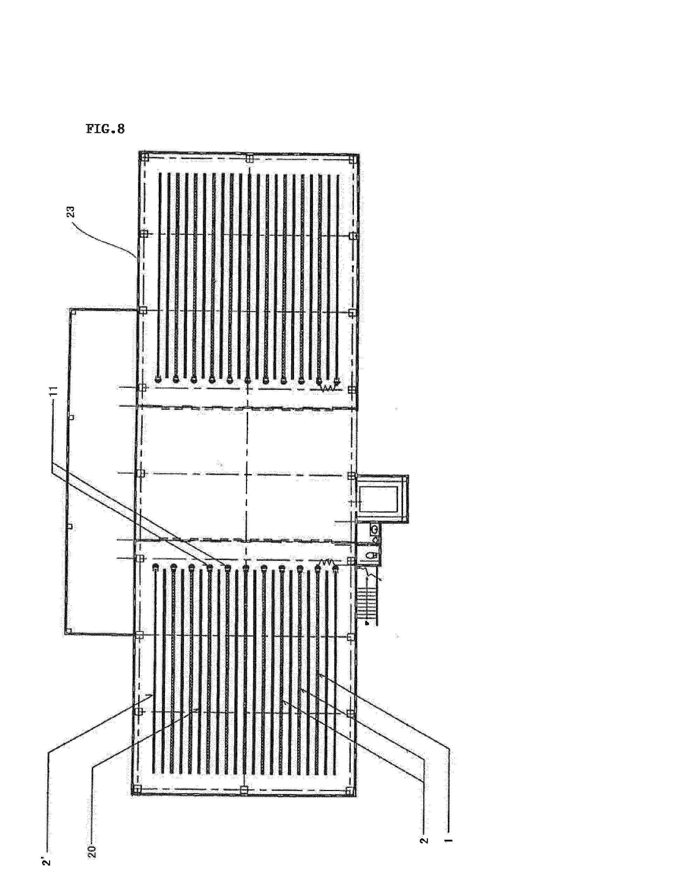

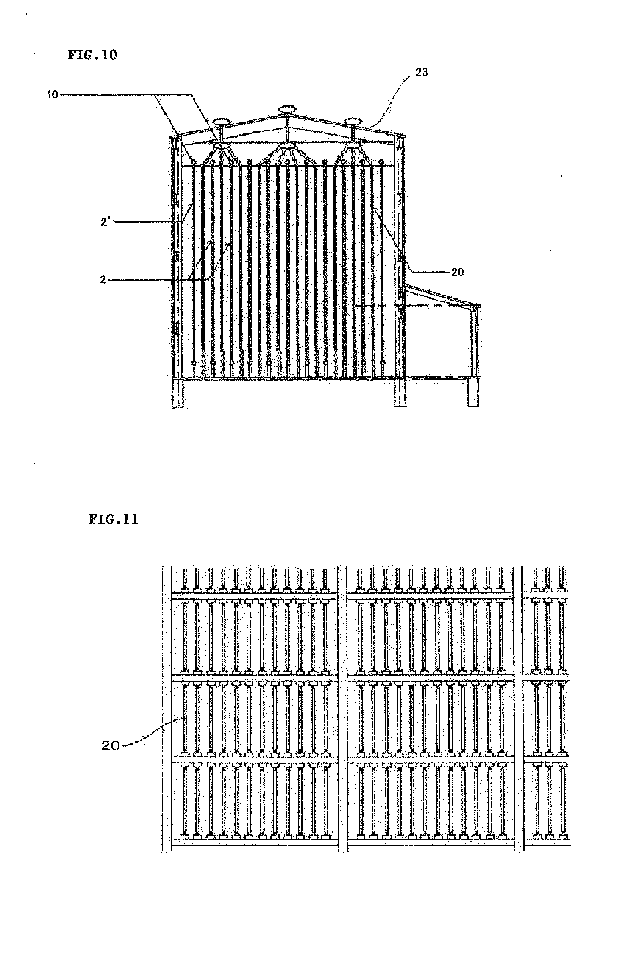

As Fig. 8 shows, rows of artificial light sources (20) are parallel to rows of plant growing boxes. As Fig. 10 and Fig. 11 shows, the artificial light sources are installed vertically on the ground in order to irradiate from the lowermost box to the uppermost box that is lifted up. In this embodiment, the height from the lowermost box to the uppermost box that is lifted up is about 11 meter, and the height of an artificial light source (20) is also about 11 meter. The artificial light source is composed of multiple stick type fluorescent lamps vertically in this embodiment, and it can compose of spherical type lamps. The stick type fluorescent lamps are connected vertically at 1.2 meter intervals and we can turn on and off the light source at 1.2 meter intervals. Furthermore, power consumption of this system decreases effectively because one row of the artificial light source can be irradiated both sides rows of plant growing pots (3) on boxes (2).

We explain how to use the Energy-saving system for vertically moving plant growing box of this embodiment as below.

Firstly, wires (9) that are suspended through chain sprocket wheels (10) are lowered on the ground. The point of the wires forms a hook. Plates (4) that are connected with an uppermost plant growing box (2) can be suspended by the hook. The uppermost plant growing box, which seedlings of vegetation are planted in the plant growing pots (3), is connected with the plates (4). The uppermost box is gone up a little by controlling a winch (11). An two-stage box, which seedlings of vegetation are also planted in the plant growing pots, is located under the uppermost box, and is connected with the uppermost box vertically by using plates (4). Sliders (8) of the both ends of the boxes are fitted to guide-rails (7) of hoisting device, and the boxes can be moved smoothly and vertically. The same process is repeated to the end of the lowermost box. According to this embodiment, the 55 boxes are located vertically.

In this situation, the uppermost box is lifted high by the hoisting device (1), and the other boxes are under it at regular intervals that the width of them is equal to the length of holes (22) of plates. According to this embodiment, the intervals between each box are about 7cm and the height between the uppermost box and the lowermost box is about 11 meter (The height of the box is about 13 cm , the width between the each box is about 7 cm and the number of boxes is 55). The lowermost box is fixed by stoppers and it cannot be moved.

Secondly, the uppermost box is gone down and each box is sliding down. As Fig.5 shows, the plates (4) come in contact with each other, and the shock absorber of the upper box and the shaft (19) of the lower box also come in contact with each other. As the result, each box is piled up in keeping with some spaces. In this situation, the spaces between boxes decrease and the height between the uppermost box and the lowermost box is about 7.15 meter (The height of the box is about 13 cm and the number of boxes is 55). Then, an artificial light source is turned on only about 7.15 meter high from the ground. We need not turn on the light source from top light source to the uppermost box (about 3.85 meter). The artificial light source is irradiated to the plants in about 10 days.

After the vegetation of pots (3) grew up and became bigger, the uppermost box is gone up by controlling the hoisting device (1) in order to avoid contact of leaves and make enough space for photosynthesis. Each box under the uppermost box is also gone up because they are connected by plates (4). And all artificial light sources are turned on from the bottom to the top (about 11 meter) and all boxes are irradiated by the light. It can be possible to harvest the vegetation after about 8 days.

As Fig. 8 and Fig. 10 show, the multistage plant growing boxes (2') that has one slant face on only one side can be installed at the both walls sides in the plant (23). It can be possible that the number of cultivation increases.

According to the Energy-saving system, the power of consumption can be saved about 33 % off because the multistage boxes can be gone down and upper side of artificial light sources (about 3.85 meter) can be turned off, when the vegetation is undeveloped.
Workers can safely and easily attach and remove the boxes on the ground without a ladder because the box can be attach to and remove from the hoisting device one by one.
And workers can operate at minimum movement as the result of moving on the ground, and we need not large air conditioner because the system of this invention is very compact even if the plant is at high densities.

### SECOND EMBODIMENT

The second embodiment of this invention relates to the way to grow different size vegetation. The system of this embodiment is also the same as one of the first embodiment.

A change in vegetation's size depends on the kinds of vegetation. Vegetables such as lettuce or spinach become bigger as growing. On the other hand, some flowers don't become bigger as growing. This invention can be applied to cultivation of these two kinds of vegetation.

Small vegetation as a seedling is planted to the lower half of multistage plant growing boxes (2), and big one as a seedling is planted to the upper half of the boxes. The uppermost box is gone down slowly, and the spaces of the lower half of the boxes decrease. Enough vertical spaces are made in the upper half of the boxes, and minimum vertical spaces are made in the lower half of the boxes.

The top side of artificial light sources (20) can be turned off and power consumption can be saved. When the vegetation of the lower half of the boxes grows, the enough spaces for growing are provided by going up the boxes.

### THIRD EMBODIMENT

The third embodiment of this invention relates to the way to harvest the vegetation after ripeness.

The each plant growing box is located on high position after the vegetation in the pots (3) grows. Firstly, the lowermost box (2) can be removed from the upper box by removing it from plates (4). Secondly, each boxes is gone down by controlling the hoisting device (1). And the lowermost box can be removed from the upper box. This process is repeated. It is also possible to remove the boxes two by two. And it is possible to operate this process smoothly by dividing the workers into two teams, namely, one is the team to control the hoisting device (1) and the other is the team to remove the boxes and harvest the plants.

Workers can harvest the plants easily because they can operate on the ground as the result of removing the boxes one by one. Furthermore, they can operate safely because they need not work high position and they need not use ladder.

### FOURTH EMBODIMENT

The forth embodiment of this invention relates to a household energy-saving device for growing plant that the energy-saving system for vertically moving plant growing box is included in the desired housing.

The household energy-saving device for growing plant (31) is mainly composed of multistage plant growing boxes (33) that are formed vertically, a hoisting device (38) that control the vertical movement of boxes, and artificial light sources (50) that irradiation range can be controlled. These instruments are in a rectangular parallelepiped housing (32). The width of the housing is about 120 cm, the height of it is about 170 cm and the depth of it is about 60 cm. The underside of the housing has casters, and the housing is movable freely.

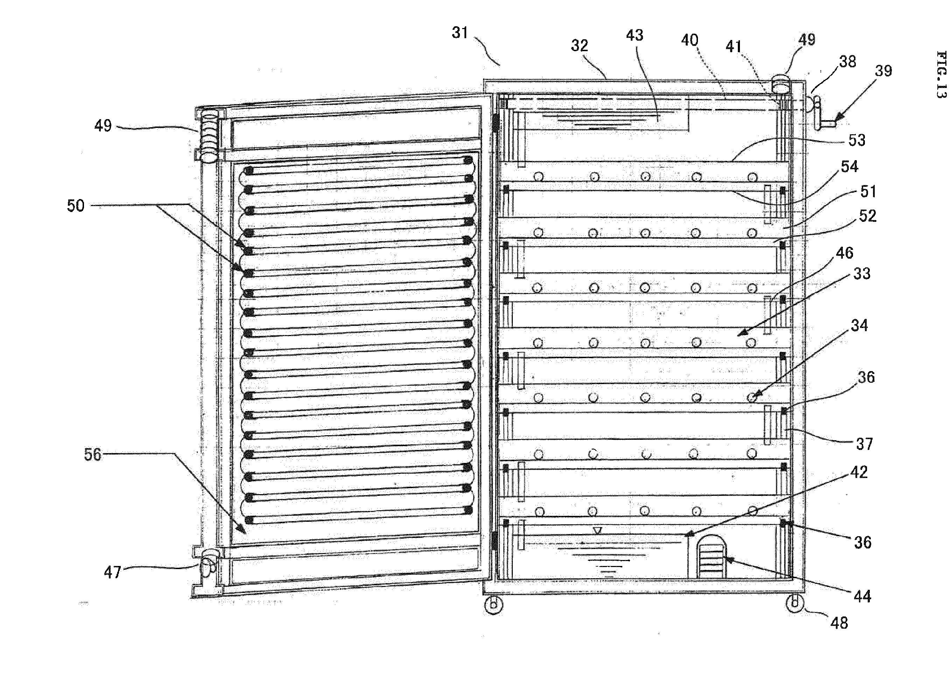

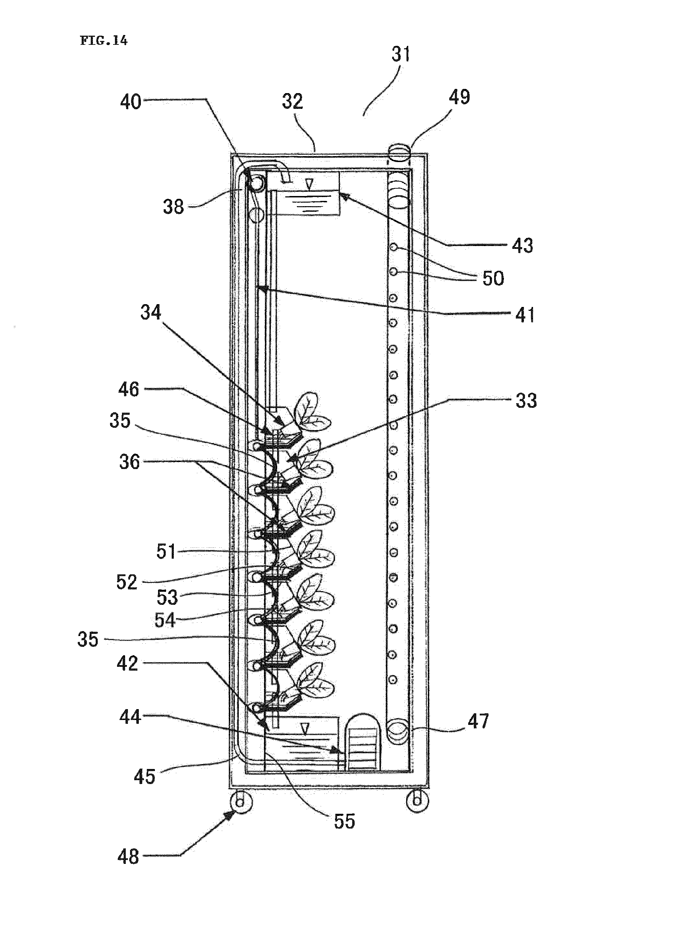

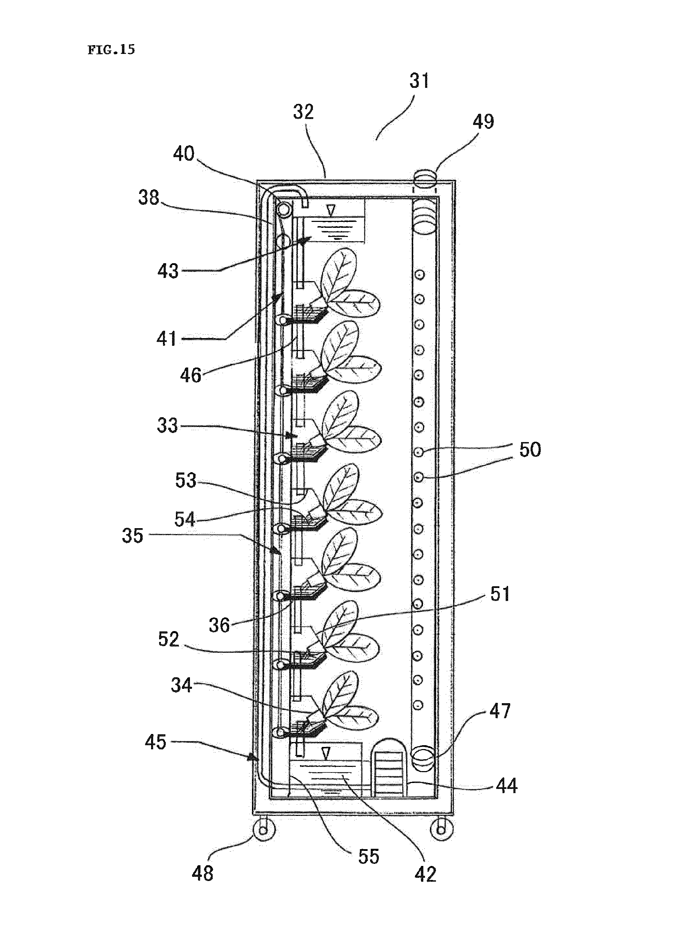

As Fig. 13 shows, the housing (32) has one door and we can open and shut the door. An acrylic glazing (56) is fitted to the door and we can see the inside situation of the box without opening the door. As Fig.14 and Fig.15 show, the inside of the box is divided into two sections by a wall (55). The front side of the section is the space to plant vegetation by plant growing boxes, and the back side of the section is the space to install a hoisting device (38) to move the boxes vertically. The hoisting device is mainly composed of wires (35) that connect each multistage plant growing boxes, wires (41) that connect the uppermost box with a roller (40) to hoist the box, a roller that can be wound the wires (41) and a handle (39) to rolling the roller. Fig. 13 shows, the upper side of the back side section has the cylindrical roller (40), and the length of it is nearly equal to the width of the housing. An one end of the roller sticks out into the outside the housing, and the roller can be rolling by turning the handle (39) because the handle is installed the end of the roller.

The wires (41) are wound around the both near ends of the roller (40), and supporting members (36) to place the uppermost box are attached to the wires. The supporting members can be gone up or gone down by rotating the roller because wires are wound or rewound.
The lower plant growing boxes are connected with the wires (35). The material of the wires is optional as long as nonelastic and flexibility wires (e.g. rubber tube etc.).

As Fig. 15 shows, all supporting members can be gone up by winding the wires (41) because the uppermost supporting member can be gone up and the lower supporting members can also be gone up as the result of connecting them by wires. The multistage plant growing boxes are placed on the supporting members and desired space can be made between each box. On the other hand, as Fig. 14 shows, all supporting members can be gone down by rewinding the wires (41), and the upper supporting members come in contact with the top face (53) of the lower supporting members and stop the motion. The lowermost supporting member comes in contact with the top face of a tank (42) and stops the motion. As the result of the process, the each plant growing box can be piled up.
We can change the width between the uppermost box and the lowermost box freely by controlling the handle (39).
When the handle is not touched, a stopper fixes the handle and prevents it from moving unintentionally by weight of the boxes etc. The Fig. 14 shows the state of wire bending easily to understand, but actually, the wire can be bent inside the section of hoisting device.

As Fig. 13-15 show, the plant growing boxes are cubic forms that are made of six faces, namely, top face (53) and under face (54) parallel to the floor, two slant faces (51, 52) on the door and two side faces. The inside of the boxes is hollow, and nutritious solution is provided into the spaces. The slant face (51) of each box has some circular pots (34). Vegetation is planted into the pots and the roots of the vegetation can be submerged under the nutritious solution through the pots. The angle of the slant face (51) is very important and the desirable degree of the angle is 40-70 to a horizontal plane, because we must expand the spaces between boxes to prevent their contact and reduce the number of boxes under the angle of 40 degrees, and we must pay attention to fall of vegetation from the pots over the angle of 70 degrees.

The nutritious solution of the tank (42) can be moved to an upper tank (43) by a suction pump (44) through a water pipe (45). And the nutritious solution can be moved to each multistage plant growing boxes through a elastic water pipe (46), and finally, it can be moved to the tank (42). This circulation of the solution can desirably be controlled automatically.

As Fig. 13-15 show, the both ends of under face (54) and slant face (52) of each plant growing box are (33) supported by each the supporting member (36) which sectional view is like "L" character, and the each box does not fall. As Fig. 13 shows, the near both ends of the wall (55) have guide-rails (37), or cut lines vertically, and the supporting members (36) are protruding from the section of hoisting device (38) to the section of plant growing boxes through the guide-rails. The width between the supporting members is nearly equal to the width between the guide-rails, and the supporting members can be moved vertically along to the guide-rails. The end of the supporting member in the hoisting device section forms large a rectangular parallelepiped (or spherical type that has two flat surfaces at least), and one flat surface contacts to the wall (55) and another flat face contacts to the back face of the box(32). So, the supporting members are fixed. It can be possible to connect a right supporting member and a left supporting member by rods in order to keep their balance. And it can be possible to thicken the wall (55) and to form slot only parts of the guide-rails(37).
The plant growing boxes can be desirably to attach to and remove from the supporting members though the boxes can be possibly fixed to the members.

As Fig. 13-15 show, artificial light sources (50) are installed inside of the door. The form of them is optional, and in this embodiment, stick type lamps are installed in parallel with floor line. The irradiation range of the light sources can be changeable corresponding to the height of the plant growing boxes, it can be possible to install the light sources longitudinally. Fine EEFL lamps are applied to the light sources. The EEFL lamp has a diameter of about 5 mm. Two acrylic boards (56) are fitted to the door, and the EEFL lamps are fitted between the boards. Humans cannot touch the lamps, and it prevents the lamps from being damaged in opening and closing motion.
In this embodiment, the artificial light sources can be switched to three types, namely, (1) all light sources can be turned off, (2) all light sources can be turned on, (3) in case that each box is gone down, the light sources from the lowermost plant growing box to the uppermost box can be turned on. In Fig 13-15, 18 lamps are used and they can be switched to three types, namely, (1) all 18 lamps can be turned off, (2) all 18 lamps can be turned on, (3) only lower 12 lamps can be turned on. It is possible to be switched to more than three types.

As Fig. 13 shows, the upper side of the door has a ventilator (49) in order to exhaust heat from light sources, and under side of the door has an admission port (47) in order to inspire cool air from outside. The ventilator and admission port are cylinder forms and the ventilator is installed from inside of the door to the upper side of the housing, and the admission port is installed from lower side of the door to inside of the housing. The heated air from light sources can be exhausted through the ventilator and cool air can be inspired through the admission port. The inside of the box can not be heated by light sources and it can be possible to keep the most suitable temperature to the vegetation in housing.

We explain how to use the household energy-saving device (31) for growing plant that the energy-saving system for vertically moving plant growing box of this embodiment as below.

Firstly, as the handle (39) is rotated, the multistage plant growing boxes (33) can be gone down as Fig. 14 shows. Seedlings of vegetation are planted to each pots (34). After the door is closed, the artificial light sources are turned on corresponding to the height from the lowermost box to the uppermost box. In this embodiment, lower 12 light sources are turned on. The light is irradiated to the plant for about 10 days.

Secondly, when the vegetation of pots is growing and the spaces between upper box and lower box become small, as the handle (39) is rotated, the multistage plant growing boxes can be gone up as Fig. 15 shows. And all artificial light sources are tuned on, namely, all boxes are irradiated by the light. We can harvest the vegetation after the light is irradiated to the plant for about 8 days.

It is possible for us to cultivate vegetation or greens easily in a house or restaurant by using the household energy-saving device for growing plant (31) of this 4th embodiment. Users do not need particular works because nutritious solution is automatically circulated and light sources are always irradiated.
In case of cultivation by artificial light sources, power consumption and power rate normally increases. Using the household energy-saving device for growing plant, however, the power consumption and power rate decreases because we can control the height from the lowermost box to the uppermost box and we can also control the range of irradiation corresponding to the height. Though the power consumption depends on the height of one box or numbers of boxes, we can reduce about one-third power consumption as the result of moving the boxes. We can cultivate plants efficiently because we do not need to decrease the number of plants.
We can also keep ample spaces for cultivation because we can move each multistage box to keep the spaces for plants.

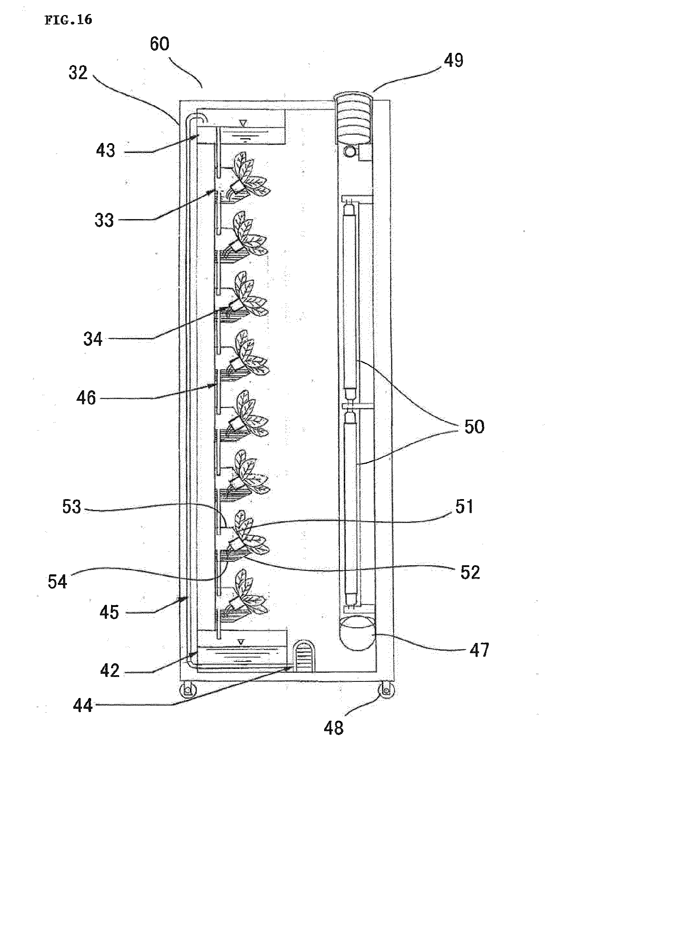

It is possible to eliminate the hoisting device (38) from the said household energy-saving device for growing plant (38) and a function of moving the boxes (33), and to make the construction more simply. As Fig. 16 shows, a household device for growing plant (60) has multistage plant growing boxes on the back side of the device. It can also be possible to decrease the power consumption by composing two stage lamps (or EEFL lamps) vertically as artificial light sources. If we use only lower boxes for cultivation, we can decrease the power consumption by half due to turn on the only lower light sources.
It is also possible to composing not multiple stage lamps but one stage lamps vertically. This construction makes the household device more simply, and their bulk production more easily.

The present invention is not limited to the above embodiments, and it is possible to design the device freely according the subject matter of the invention.

## Claims

1. An energy-saving system for vertically moving plant growing box comprised of,
plant growing boxes that are installed as multistage style vertically,
a hoisting device,
artificial light sources that can be controlled to turn on or off corresponding to the movement of the plant growing boxes,
the plant growing boxes that the height between them can be widened or reduced by the hoisting device,
the plant growing boxes can be took away one by one.

2. An energy-saving system for vertically moving plant growing box comprised of, multistage plant growing boxes vertically,
a hoisting device,
artificial light sources,
the uppermost plant growing box can be gone up or gone down due to connect the box with a winch through wires ,
the lower plant growing boxes can be connected each other with plates fixed by bolts, the plant growing boxes can be moved vertically.

3. An energy-saving system for vertically moving plant growing box according to claim 1 and claim 2,
wherein,
the lower boxes can be moved vertically corresponding to the movement of the uppermost box,
the artificial light sources can be turned on or off corresponding to the height between the lowermost box and the uppermost box.

4. An energy-saving system for vertically moving plant growing box according to claim 1 through claim 3,
wherein,
the artificial light sources are installed vertically at the height that can be irradiated from the lower plant growing box to the upper plant growing box at the highest position,
the artificial light sources can be turned on or off at regular vertical intervals.

5. An energy-saving system for vertically moving plant growing box according to claim 1 through claim 4,
wherein, in a cultivation plant,
the rows of plant growing boxes that has one side slant face for pots are installed at the both ends of the cultivation plant,
the rows of the plant growing boxes that has both side slant faces for pots are installed between the said rows,
the rows of the artificial light sources that can be irradiated at whole area are installed between the said rows of plant growing boxes.

6. An energy-saving method for vertically moving plant growing box comprised of, plant growing boxes that are installed as multistage style vertically,
a hoisting device,
artificial light sources that can be controlled to turn on or off corresponding to the moving of the plant growing boxes,
wherein,
a step to reduce the height between the lowermost box and the uppermost box due to lowered the uppermost box,
a step to irradiate the artificial light to the all boxes corresponding to the said lowing movement,
a step to increase the height between the lowermost box and the uppermost box due to lift up the uppermost box,
a step to irradiate the artificial light to the all boxes corresponding to the said lifting movement.

7. An household energy-saving device for growing plant comprised of,
plant growing boxes that are installed as multistage style vertically,
a hoisting device,
artificial light sources that can be controlled to turn on or off corresponding to the movement of the plant growing boxes,
a housing that includes the plant growing boxes, the hoisting device and the artificial light sources,
the plant growing boxes that the height between them can be widened pr reduced by the hoisting device.

8. An household energy-saving device for growing plant according to claim 7, Wherein,
cubical supporting members that has one or more plane inside the housing,
the supporting members that the uppermost box can be placed are connected with roller through wires, and the supporting members can be moved vertically,
the supporting members that the uppermost box and lower boxes can be placed are connected with wires, and the supporting members can be moved vertically.

9. An household energy-saving device for growing plant according to claim 7 and claim 8, wherein,
the lower boxes can be moved vertically corresponding to the movement of the uppermost box,
the artificial light sources can be turned on or off corresponding to the height between the lowermost box and the uppermost box.
